# EUROPEAN PATENT APPLICATION

(11) **EP 0 630 872 A1**
(43) Date of publication of application: **28.12.1994**
(21) Application number: 93110203.2
(22) Date of filing: 25.06.1993
(51) Int. Cl.: C04B 28/26, C04B 35/14

(54) **Ceramics having high compressive strength and a process for the production of the same**

(71) Applicant: Hyun-Jae, Kwon, Seocho-Gu, Seoul (KR); Jae-Chun, Kim, Nam-Gu, Inchun-Si (KR)
(72) Inventor: Jae-Chun, Kim, Nam-Gu,Inchun-Si (KR)
(74) Representative: von Füner, Alexander, Dr.

(57) **Abstract**

A process for the production of ceramic materials having high compressive strength is disclosed which comprises admixing 100 weight parts of fly ash in about 15 to 40 weight parts of NaOH water solution of about 5 to 60 N concentration, molding the admixture under pressure, and immediately, sintering at a temperature without drying and curing. The process is capable of making use of fly ash, pollutant, in enormous amounts, and ceramic materials produced thereby are utilized as useful materials such as construction materials, so that it is contributed to the reuse of industrial waste materials.

## Description

### BACKGROUND OF THE INVENTION

### Field of the Invention

The present invention relates to ceramic materials having high compressive strength in which fly ash is in amount that may constitute a major proportion of the ceramic materials, and to a process for the production of the same. The present invention also relates to a process for the disposal of particulate waste materials which are resulted from the combustion of coal, such as fly ash, whereby these materials are converted into ceramic materials.

### Description of the Prior Art

In the devices utilizing coal as a power source, such as black coal-fired burners, enormous amounts of fly ash are generated and escape to the atmosphere, and thus, may cause polluting effects. Accordingly, in both aspects of solving the pollution problem through the reuse of the industrial waste materials and of developing substitute materials, measures have been steadily undertaken to reuse as much fly ash as possible.

Prior art has sought ways of utilizing or disposing of the fly ash in a satisfactory manner through the following process.

A process for the preparation of solid aggregate materials is disclosed in Japanese Patent Laid-Open No. Sho 63-107853 that comprises pouring an admixture of fly ash and 5 N concentration of NaOH water solution into a mold, pressuring the mixture with a high pressure air of about 300 atm., and then heating at about 200 to 400°C for a water heating reaction and cooling in order to make heat-insulating panels.

Another process is disclosed in Japanese Patent Laid-Open No. Sho 63-310716 that comprises autoclaving an admixture of 50 g of fly ash and 50 ml of 1 to 4 N concentration NaOH or Na₂CO₃ water solution to extract SiO₂ from the fly ash in a form of water glass which is then recovered, cleaning remnant fly ash with water and drying subsequently, and curing with a cement curing agent.

A similar technique is described in Japanese Patent Laid-Open No. Sho 64-90079 which comprises the water-heating reaction of about 70 to 80 % by weight of fly ash and about 30 to 15% by weight of 5 N concentration NaOH water solution under the condition of above 100 kg/cm² of pressure and 200 to 400°C of temp. and curing until solid aggregate materials are formed.

And, a further process is described in International Patent Publication No. WO92/22514. As described, solid aggregate materials such landfill and bricks are produced by making use of fly ash in combination with NaOH, a water soluble silicate, water, a binder and other additives to prepare an admixture which is subsequently molded and then cured at 100°C for 7 days.

However, the prior arts above mentioned have several disadvantages.

For example, the panels produced in accordance with Japanese Patent Laid-Open No. Sho 63-107853 above mentioned have an insufficient strength such that the panels may be difficult to be commercially available. In addition, because of utilizing a high pressure air, for example, of 300 atm. it is dangerous and thus inconvenient to carry out the pressuring processing. The process in the second referred patent is useful for yielding water glass but, becomes intricate in the facts that necessitate a cleaning and a drying as well as additional cement curing agent in order to produce solid aggregate materials which are unnecessary in the present invention. Another problem encountered with the solid aggregate materials in accordance with this process is that the strength and the water resistance thereof are so insufficient that the materials may not be used as construction materials.

The product according to the third referred patent has requisite compressive strength, so that the technique is useful for the reuse of the fly ash. But as described in the technique, a high pressure, for example, of above 100 kg/cm² is demanded for long time, so that the loss of energy is large and the machine used in this processing becomes worn quickly. Particularly, the water resistance thereof is insufficient for the product to be commercially available.

The product in accordance with the above referred patent last is utilized as landfill, but the strength and the water resistance thereof are insufficient for the product to be utilized as construction materials.

### SUMMARY OF THE INVENTION

For solving the problems above stated, the present inventor has recognized that there exists a need for a process that is capable of utilizing substantial amounts of fly ash in a manner that not only facilitate disposal but would turn the fly ash into useful forms, for example, brick, panel, paver, and etc..

Accordingly, in one aspect of the present invention, there is provided a process capable of reusing enormous amounts of industrial wastes such as fly ash which are ultimately converted into useful materials for construction or electronic appliances thereby.

According to another aspect of the present invention, there is provided a simple process capable of making use of fly ash to produce useful materials such as construction materials which are constituted by a major proportion of the fly ash.

According to a further aspect of the present invention, there is provided ceramic materials having high strength and good water resistance which are able to be used as construction materials.

These and other objects and advantages of the present invention will become more apparent as the following description proceeds.

### DETAILED DESCRIPTION OF THE INVENTION

In an embodiment of the invention, ceramic materials having high strength are produced by the process that comprises admixing fly ash, which constitutes a major proportion of a final product, for example, above 70 % by weight, in a high concentration of NaOH water solution, molding the admixture under the pressure of about 10 to 70 kg/cm², and sintering the molded product at about 600 to 1,200°C to produce ceramic materials having high strength. In this process, addition of aluminum powder in combination with sawdust and NaHCO₃ makes light ceramic materials produced.

Any fly ash is able to be used in the process according to the patent, insofar as the content of SiO₂ is above 20 % by weight and those that have a low content of water and impurities are preferable.

The concentration of the NaOH water solution used in the present invention is preferable to be on the order of from about 5 to about 60 N. The amount of the solution is about 15 to 45 weight parts (hereinafter "parts") based on 100 parts of the fly ash, whereas the amount of NaOH is about 10 to 30 parts, preferably, about 12 to 25 parts. For example, if the concentration of NaOH is below the range, the strength of the final product becomes insufficient, especially, the water resistance becomes deteriorated. On the other hand, if the concentration is over the range, the mixing and molding treatments are impossible as well as the strength of the final product is lowered because the reaction among constituents occurs insufficiently. In the event of the amount of NaOH, if too little NaOH is used, reaction among the fly ash occurs insufficiently so that the strength may be lowered. On the other hand, if too much NaOH is used, the cost of production increases excessively as compared with the improvement of physical properties of the final product, and the alkalinity thereof becomes too high. In accordance with the process of the present invention, the treatment of molding the admixture of fly ash and NaOH water solution is carried out under pressure. A suitable pressure is on the order of about from 10 to about 70 kg/cm₂, preferably about 15 to 40 kg/cm². For example, if the pressure is below the range, the strength of the final product is of sufficiency whereas if over the range, cracking or peeling phenomena occur on the surface of the final product.

The heating treatment in our process is carried out at a certain temperature. A suitable temperature is on the order of from about 500°C to about 1,200°C, preferably about 600 to 1,000°C. For example, in case of below the range, the fly ash react to one another insufficiently so that the strength and the water resistance of the final product are not attained enough. Whereas, if over the range, the cost of production increases excessively as compared that the physical properties of the final product is improved, and melting phenomena occur extremely on the surface of the final product.

In the prior arts, after molding, but before heating step, the steps of drying and curing are generally necessary for several hours or days in order to prevent the final product from cracking. In the present process, the heating step, however, is able to be carried out immediately after molding step. Accordingly, the immediate heating subsequent to molding (that is, the drying and curing steps are omitted) has an advantage of a remarkable increase in productivity.

In the process according to the present invention, other additives such as NaHCO₃, ZnO, aluminum powder, sawdust and etc. may be added, depending on the purpose of utilizing the product. For example, NaHCO₃ or aluminum powder may be added within the range of 3 % by weight for lightening a final product. Also, silica, formic acid of soda, boric acid, and etc. may be added within the range of 10 % by weight for improving the strength. Moreover, Na₂SiO₃ as a binder or anti-cracking agent, and Na₂CO₃ as an anti-distorting agent when heating, may be added within the range of 5 % by weight, individually.

The process in accordance with the present invention is capable of being applied to materials containing above 20 % by weight of SiO₂ and above 15 % by weight of Al₂O3.

In order to better understand the nature of the present invention, a number of examples will now be described.

The ingredients and compositions of fly ash used in examples and comparative examples are as follows.
a. water content: about 10 %
b. ingredients (weight %) : SiO₂ (54.57), Al₂O₃ (25.65), Fe₂O₃ _{(10.63),} MgO (0.27), K₂O (3.04), Na₂O (1.08), and others (4.76)
c. distribution of particle sizes : 57.6 % of below 40µm
d. carbon not fired (weight %) : 3.55

### EXAMPLES 1 - 4

900 g of fly ash was added to a solution of 70 cc water containing 130 g of 98 % NaOH. The resultant solution was stirred to be homogeneous, and poured into a mold with a size of 190 x 85 x 55 (mm). Molding was carried out under the pressure of 15 kg/cm². The resultant molded products were immediately sintered under the conditions of temperatures and heating times as shown in Table 1 without being dried, and then, cooled slowly to prepare specimens. The physical properties of the specimens were measured. Their results are given as shown in Table 1.

**Table 1**

| Examples | Sintering Temp.(°C) | Sintering Time (hr) | Compressive Strength(kg/cm²) | * Water resistance |
|---|---|---|---|---|
| Example 1 | 700 | 1.5 | 220 | good |
| Example 2 | 800 | 1.0 | 250 | good |
| Example 3 | 900 | 0.5 | 280 | good |
| Example 4 | 1,000 | 0.2 | 282 | good |

| | | | | |
|---|---|---|---|---|
| * "Water Resistance" means such a degree that when in water for 7 days, the specimens do not break into pieces at their surfaces. | | | | |

### EXAMPLES 5 - 11

900 g of fly ash was added to a solution of 70 cc water containing 130 g of 98 % NaOH. The resultant solution was stirred to be homogeneous, and poured into a mold with a size of 190 x 85 x 55 (mm). Molding was carried out under the pressures shown in Table 2. The resultant molded products were immediately sintered at 900°C for 30 min. without being dried, and then, cooled slowly to prepare specimens. The physical properties of the specimens were measured. Their results are given as shown in Table 2.

**Table 2**

| Examples | Pressure (kg/cm²) | Compressive Strength(kg/cm²) | Water resistance | * Surface Condition |
|---|---|---|---|---|
| Example 5 | 10 | 150 | good | good |
| Example 6 | 20 | 276 | good | good |
| Example 7 | 30 | 280 | good | good |
| Example 8 | 40 | 282 | good | normal |
| Example 9 | 50 | 283 | good | normal |
| Example 10 | 60 | 280 | good | normal |
| Example 11 | 70 | 270 | good | bad |

| | | | | |
|---|---|---|---|---|
| * "Surface condition" is measured by discriminating the cracking and peeling of surface with human eyes. | | | | |

### COMPARATIVE EXAMPLES 1 - 5

Specimens were prepared in a manner similar to Example 1 except that the sintering temperature was 200 to 550°C and the sintering time was 1 hour. The physical properties are given as shown in Table 3.

### COMPARATIVE EXAMPLES 6

Specimens were prepared in a manner similar to Example 1 except that 50 g of NaOH was used. The physical properties are given as shown in Table 3.

**Table 3**

| Comparative Examples | Temperature (°C) | Compressive Strength(kg/cm²) | Water Resistance |
|---|---|---|---|
| C. Example 1 | 200 | 36 | bad |
| C. Example 2 | 300 | 40 | bad |
| C. Example 3 | 400 | 45 | bad |
| C. Example 4 | 500 | 55 | bad |
| C. Example 5 | 550 | 80 | normal |
| C. Example 6 | 700 | 68 | bad |

### EXAMPLE 12

900 g of fly ash was mixed in combination with 50 g of 98 % NaOH, 10 g of NaHCO₃, 0.5 g of aluminum powder to produce a mixture which was subsequently pulverized into 250 mesh of particle size. This was added to 100 cc of water and then stirred. The resultant mixture was poured into a mold with a size of 190 x 85 x 55 (mm), aged for 4 hours at 300°C and sintered at 700°C for 30 min. to prepare a foamed body. The properties of the foamed body were shown as specific gravity 0.7 and compressive strength 60 kg/cm².

From the results of Examples and Comparative Examples, the ceramic materials prepared by the process according to the present invention have high compressive strength and desirable water resistance, so as to be used as construction materials such as bricks, panels, pavers, and etc. The ceramic materials are also excellent in processability and heat resistance so that may be useful as materials for electronic components and automobile accessories. Moreover, lightening of the ceramic materials makes it possible to substitute them for conventional light bricks. Consequently, the process according to the present invention and the ceramic materials thereby can allow the fly ash which pollute the atmosphere worse to be converted into useful materials in enormous amounts.

Whilst the present invention has been described with reference to certain preferred embodiments and examples, it will be appreciated by those skilled in the art that numerous variations and modifications are possible without departing from the spirit or scope of the invention as broadly described.

## Claims

1. A process for the production of ceramic materials having high compressive strength, which comprises admixing 100 weight parts of fly ash in about 15 to 40 weight parts of NaOH water solution of about 5 to 60 N concentration, molding the admixture under pressure, and then, sintering the molded product at a predetermined temperature.

2. The process of claim 1, wherein when the molding is carried out, the pressure is on the order of from about 10 to about 70 kg/cm².

3. The process of claim 1 or 2, wherein when the sintering is carried out, the temperature is on the order of from about 600 to 1,200°C.

4. The process of claim 1, wherein the sintering is immediately carried out after the molding without drying and curing.

5. The process of claims 1 to 4, wherein a foaming agent is added to the solution.

6. A ceramic article produced by the process of any one of claims 1 to 5.
